# EUROPEAN PATENT SPECIFICATION

(11) **EP 3 896 351 B1**
(45) Date of publication and mention of the grant of the patent: **07.02.2024**
(21) Application number: 19896368.8
(22) Date of filing: 12.12.2019
(51) Int. Cl.: F24F 11/49, F24F 11/52, F24F 11/56, F24F 11/65, G06F 9/00, G05B 19/02, F24F 1/0071

(54) **AIR CONDITIONER**
KLIMAANLAGE
DISPOSITIF DE CONDITIONNEMENT D'AIR

(30) Priority: 14.12.2018 CN 201811535417
(43) Date of publication of application: 20.10.2021
(73) Proprietor: QINGDAO HISENSE HITACHI AIR-CONDITIONING SYSTEMS CO., LTD., Economic and Technical Development Zone Qingdao, Shandong 266555 (CN)
(72) Inventor: ZHANG, Jixue, Shandong 266555 (CN); REN, Zhaoting, Shandong 266555 (CN); LIU, Kun, Shandong 266555 (CN); LI, Leilei, Shandong 266555 (CN)
(74) Representative: Casalonga
(86) International application number: PCT/CN2019/124862
(87) International publication number: WO 2020/119761

(56) References cited:
- CH-A1- 707 624
- CN-A- 101 173 776
- CN-A- 104 329 770
- CN-A- 108 297 647
- CN-A- 109 708 254
- CN-U- 202 303 768
- CN-U- 207 963 053
- JP-A- H1 194 339
- KR-A- 20060 066 516
- KR-A- 20140 054 689
- US-A1- 2017 364 044

## Description

### TECHNICAL FIELD

The present invention relates to the technical field of air conditioning, and specifically, to an air conditioner.

### BACKGROUND

As people pay more attention to air quality, air conditioners with an air purification function have appeared. Due to limitation of costs of hardware, in order to meet needs of different users, air conditioners of a same style are configured with different functional modules, such as being configured with an air purification module or being not configured with the air purification module. If other hardware and functions of the air conditioners with the two configurations are the same, in order to facilitate management and save development costs, a set of control logic is usually adopted, and regardless of whether the air purification module is configured, an air purification identifier may be adjusted and displayed on a controller. Such user experience is extremely poor, and is easy to cause misunderstanding and unnecessary cumbersome operations.

Another way is to actively detect whether there is an air purification module by adding a feedback circuit, which increases costs of hardware circuits accordingly.

CH707624A1 provides a control device for an HVAC system, the control device having a communication module for communication with one or more components of the HVAC system. The control device comprises a passive NFC transponder, which is set up to receive and store a unique identifier of the one or more components from a mobile service device before switching on a power supply to the control device, and a control module, which is set up to access stored identifiers after switching on a power supply of the control device and to transmit control signals to components determined by the identifiers via the communication module. The invention also relates to a mobile service device and components designed as drives, sensor devices, controllers, operating devices and/or communication devices of the HVAC system.

CN202303768U provides a controller for universal spare parts of air conditioners, which comprises a central processing unit and a load driving circuit connected with the central processing unit, wherein the central processing unit is connected with the load driving circuit by a Darlington circuit. According to the utility model, in a structure that the central processing unit is connected with the load driving circuit by the Darlington circuit, different hardware circuits are intensively embodied on a same controller hardware circuit, and different software is integrated on a same chip program; because the controller disclosed by the utility model integrates different hardware and software functions, the controller is good in compatibility; meanwhile, through setting different marker bits in a memory, the accepting or rejecting of the hardware and software functions are determined through accepting or rejecting the different marker bits; and after a socket is arranged on the controller, the memory is installed conveniently just through the steps that after designers design different memory parameters, the after-sales personnel directly programs different parameters as required, and then, the memory is installed on the controller for universal spare parts.

### SUMMARY

In one aspect, the present invention provides an air conditioner which is defined by claim 1.

Further advantageous embodiments of the present invention are indicated in the dependent claims.

### BRIEF DESCRIPTION OF THE DRAWINGS

In order to describe technical solutions in embodiments of the present invention or the prior art more clearly, accompanying drawings to be used in the description of the embodiments or the prior art will be introduced briefly below. Obviously, the accompanying drawings are merely some embodiments of the present invention.
FIG. 1 is a block diagram showing a principle of an embodiment of an air conditioner provided by the present invention; and
FIG. 2 is a control logic diagram of an embodiment of an air conditioner provided by the present invention.

### DETAILED DESCRIPTION

The technical solutions in the embodiments of the present invention will be described clearly and completely below with reference to the accompanying drawings. Obviously, the described embodiments are merely some but not all embodiments of the present invention. All other embodiments obtained by a person of ordinary skill in the art based on the scope of the claims shall be included in the protection scope of the present invention.

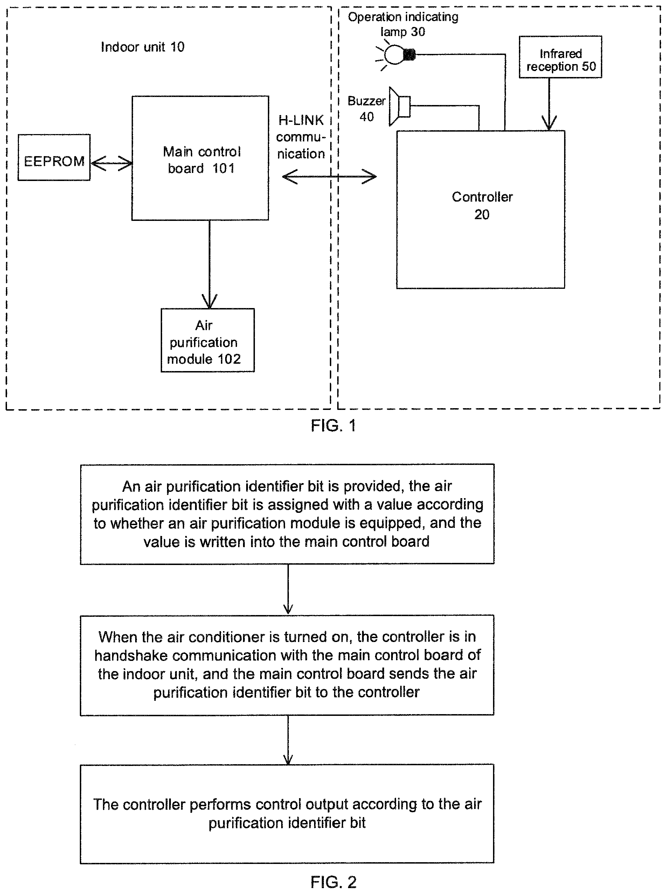

A first embodiment: this embodiment provides an air conditioner. As shown in FIG. 1, the air conditioner includes an indoor unit 10 and a controller 20. The indoor unit 10 includes a main control board 101 and a memory EEPROM connected to the main control board 101. The main control board 101 is communicatively connected to the controller 20 in a wired or wireless manner. The main control board 101 is provided with, therein, an air purification identifier bit which is assigned with a value according to whether an air purification module 102 is equipped. When the air conditioner is turned on, the controller 20 is in handshake communication with the main control board 101, the main control board 101 sends the air purification identifier bit to the controller 20, and the controller 20 performs control output according to the air purification identifier bit. The air purification identifier bit is stored in the memory EEPROM.

Functions of air conditioners will be checked before they leave a factory, which is referred to as commodity inspection for short. For a correspondence of subsequent product sales, during the commodity inspection, a unique number for the indoor unit 10 is generated by a commodity inspection device according to information such as a manufacturing date and a model. During the commodity inspection, the number is written into the indoor unit 10, and the indoor unit 10 stores the number in the EEPROM. In the present solution, an air purification identifier bit is added in a message of the manufacturing number. For example, regarding whether the indoor unit 10 is installed with the air purification module 102, models of an indoor unit 10 installed with the air purification module 102 and an indoor unit 10 installed with no air purification module when they leave the factory are distinguished, and are divided into model 1 (installed with the air purification module 102) and model 2 (installed with no air purification module). In this way, during manufacturing, when the manufacturing number is written, the message of the manufacturing number has the air purification identifier bit added therein for identifying presence or absence of the air purification module 102. For the model 1, the air purification identifier bit in the message is 1 (i.e., valid) when the manufacturing number is written, and for the model 2, the air purification identifier bit is 0 (i.e., invalid). Then, the indoor unit 10 stores the identifier bit in the EEPROM. During the commodity inspection, the manufacturing number is written after heating test, refrigeration test, water pump test, motor test and other steps. In this case, the commodity inspection device sends the unique manufacturing number of the indoor unit 10 scanned before the commodity inspection to the indoor unit 10, and the indoor unit 10 sends the manufacturing number to the commodity inspection device again after receiving the manufacturing number. The commodity inspection device compares the received manufacturing number with the manufacturing number scanned by the commodity inspection device, and if they are consistent, the manufacturing number is successfully written.

In actual use, the indoor unit 10 sends the identifier bit information to the controller 20 when in handshake with the controller 20. The controller determines whether the air purification module 102 is installed according to the value of the air purification identifier bit of the indoor unit 10, and then determines whether the air purification identifier may be adjusted and displayed.

The controller 20 performs the control output according to the air purification identifier bit to control the indoor unit with the air purification module and the indoor unit without the air purification module to perform different outputs. Therefore, it is possible to avoid a technical problem in the prior art that the air purification identifier is displayed regardless of whether there is the air purification module 102, which is easy to cause misunderstanding and unnecessary cumbersome operations.

In a case where the air purification identifier bit is valid, it is determined that the indoor unit 10 is provided with the air purification module 102, and the controller 20 controls the air purification identifier to be displayed. The air purification identifier is used to indicate a turn-on state of the air purification module 102. Otherwise, it is determined that the indoor unit 10 is not provided with the air purification module 102, and the controller 20 controls the air purification identifier not to be displayed.

According to the received air purification identifier bit, in a case where the bit is 1 (i.e., valid), the controller 20 controls the air purification module 102 to be automatically started when the indoor unit 10 is turned on, and the air purification identifier is displayed on a liquid crystal display of the controller 20 to indicate the turn-on state of the air purification module 102 to a user; and the controller 20 controls the air purification module 102 to be automatically turned off when the indoor unit 10 is turned off, and the air purification identifier on the display screen is extinguished, which no longer needs to be set by the user. In a case where the identifier bit is 0 (i.e., invalid), regardless of whether the indoor unit 10 is in a turn-on state or a turn-off state, the air purification identifier is not displayed on the display screen.

Preferably, the turn-on state of the air purification module 102 may be changed only when the air purification identifier is displayed. The turn-on state of the air purification module 102 is changed by operating the controller 20 by the user. The controller 20 controls the air purification module 102 to be turned on or off according to the operation of the user, and changes the air purification identifier synchronously.

The indoor unit 10 communicates with the controller 20. The indoor unit 10 sends a state of presence or absence of its own functional module to the controller 20. The controller 20 sends a command to the indoor unit 10. The indoor unit 10 performs corresponding execution according to the command of the controller 20. The main control board 101 of the indoor unit 10 is provided with a port for controlling output of the air purification module 102. A relationship between the indoor unit 10 and the air purification module 102 is that, when the controller 20 sends a command to turn on the air purification module 102, the port, corresponding to the air purification module 102, on the main control board 101 of the indoor unit 10 outputs a control signal.

In order to facilitate that although no function module is configured when the air conditioner leaves the factory, the function module is additionally configured according to needs of the user after the air conditioner leaves the factory, the controller 20 further has a function selection setting identifier bit for forced control of display or non-display of the air purification identifier. If a machine leaving the factory is not provided with the air purification module 102, the air purification identifier bit is invalid when the manufacturing number is written into the indoor unit 10, the controller 20 cannot control the air purification identifier to be displayed under normal logic, and then the user cannot adjust the turn-on state of the air purification module 102. By adding a function selection, which is set on site, on the controller 20, if the user wants to select to configure the air purification module 102 after the user accomplishes installation, the user may set the function selection setting identifier bit L4 of the controller 20 to be 1 (i.e., set to be valid). In this way, even if the air purification module 102 is not installed when the air conditioner leaves the factory, on-off control of the air purification may be achieved through subsequent selective configuration.

The function selection setting identifier bit belongs to the forced control of the display or non-display of the air purification identifier, and a priority of the function selection setting identifier bit is higher than a priority of the air purification identifier bit. Therefore, the controller 20 first determines whether the function selection setting identifier bit is valid, and if the function selection setting identifier bit is valid, the controller 20 controls the air purification identifier to be displayed, and does not need to determine the value of the air purification identifier bit again.

The function selection setting identifier bit may further include invalidation and a third state. If the function selection setting identifier bit is the third state, the control output is performed according to the air purification identifier bit. If the function selection setting identifier bit is invalid, the air purification identifier is controlled not to be displayed. For an indoor unit 10 with an air purification identifier bit of 1, a right of the user to select the invalidation is reserved. That is, if the user does not use this function, in order to avoid resetting each time the indoor unit 10 is turned on, the user may set the function selection setting identifier bit to be invalid, and thus the air purification identifier is no longer controlled to be displayed when the indoor unit 10 is turned on.

The function selection setting identifier bit may be defaulted to be the third state, and a logic of forced display is made not to interfere with a control logic of normally performing the control according to the air purification identifier bit as much as possible. The indoor unit 10 may be reserved with an air purifier interface. An indoor unit 10 with an invalid air purification identifier bit may be selected to be connected to an air purification module through the air purifier interface at any time, and the function selection setting identifier bit may be manually changed to be valid. This situation belongs to a situation of subsequent function expansion by the user, which requires changes and configurations by professionals.

For the indoor unit 10 with the air purification module 102, the controller 20 controls the air purification module 102 to be turned on while controlling the air purification identifier to be displayed. By setting the air purification module 102 to be automatically turned on when the indoor 10 unit is turned on, it is possible to omit selecting to turn on the air purification module 102 by the user each time the indoor unit 10 is turned on, which facilitates use of the user.

When the controller 20 controls the indoor unit 10, the user may need to customize some personalized use needs, such as backlight brightness time selection, room temperature display selection or set temperature display selection, heating and cooling temperature compensation and other settings of the controller 20, each of which corresponds to a function selection b1, b2, b3, etc., and represented meanings are different when different values are selected. Therefore, the controller 20 may further have one or any combination of a heating set temperature compensation release identifier bit, a heating cycle identifier bit, a compressor protection identifier bit, a fixed operation mode identifier bit and a fixed set temperature identifier bit. As shown in the following table:

**Table 1**

| Serial number | Item | Instruction | Set value |
|---|---|---|---|
| 1 | b1 | Heating set temperature compensation release | 0: invalid 1: valid |
| 2 | b2 | Heating cycle | 0: invalid 1: valid |
| 3 | b3 | (Compressor) three-minute protection | 0: invalid 1: valid |
| 4 | b6 | Fixed operation mode | 0: invalid 1: valid |
| 5 | b7 | Fixed set temperature | 0: invalid 1: valid |
| 6 | L4 | Valid or invalid NANOE switch | 0: invalid 1: valid |

The air conditioner according to the present invention solves a display control problem of air conditioners with different configurations of the controller, where configuration condition is marked by setting the identifier bit for the functional module, and the controller 20 performs corresponding output control according to the identifier bit, which improves user experience and does not incur costs of the hardware in a case where hardware is not changed. In addition, a situation where the functional module is not selected to be configured when the air conditioner leaves the factory and is selected to be configured after the air conditioner leaves the factory is considered, which may achieve a same display control effect as that of being provided with the functional module when the air conditioner leaves the factory, and has an extremely strong compatibility.

The air conditioner in this embodiment may be a multi-split air conditioner, and one controller 20 may correspondingly control one indoor unit 10, or one controller 20 may correspondingly control a plurality of indoor units 10.

Of course, the foregoing description is not limitation to the present invention, and the present invention is not limited to the above examples. Variations, modifications, additions or substitutions made by a person of ordinary skill in the art within the scope of the claims shall also belong to the protection scope of the present invention.

## Claims

1. An air conditioner, comprising an indoor unit (10) and a controller (20), wherein the indoor unit (10) includes a main control board (101), and the main control board (101) is communicatively connected to the controller (20) in a wired or wireless manner;
wherein the main control board (101) is provided with an air purification identifier bit therein, the air purification identifier bit being assigned with a value according to whether an air purification module (102) is equipped; and wherein,
when the air conditioner is turned on, the controller (20) is adapted to communicate with the main control board (101), the main control board (101) is adapted to send the air purification identifier bit to the controller (20), and the controller (20) is configured to perform control output according to the air purification identifier bit;
and wherein in a case where the air purification identifier bit is valid, it is determined that the indoor unit (10) is provided with the air purification module (102) and the controller (20) is configured to control an air purification identifier to be displayed, the air purification identifier being used to indicate a turn-on state of the air purification module (102); otherwise, in case where the air purification identifier is invalid, it is determined that the indoor unit (10) is not provided with the air purification module (102), and the controller (20) is configured to control the air purification identifier not to be displayed;
wherein the controller (20) is further configured with a function selection setting identifier bit for forced control of display or non-display of the air purification identifier;
wherein the function selection setting identifier bit has a higher priority than the air purification identifier bit; and wherein the controller (20) is configured to first determine whether the function selection setting identifier bit is valid, and if the function selection setting identifier bit is valid, the controller (20) is configured to control the air purification identifier to be displayed.

2. The air conditioner according to claim 1, **characterized in that** the turn-on state of the air purification module (102) is able to be changed only when the air purification identifier is displayed, wherein the turn-on state of the air purification module (102) is changed by operating the controller (20) by a user, and wherein the controller (20) is configured to control the air purification module (102) to be turned on or off according to the operation of the user, and to change the air purification identifier synchronously.

3. The air conditioner according to claim 1 or 2, **characterized in that** the function selection setting identifier bit implemented in the controller (20) further includes invalidation and a third state, wherein, if the function selection setting identifier bit is the third state, the control output is performed according to the air purification identifier bit, and wherein if the function selection setting identifier bit is invalid, the air purification identifier is controlled not to be displayed.

4. The air conditioner according to claim 3, **characterized in that** the function selection setting identifier bit implemented in the controller (20) is defaulted to be the third state, and an air purifier interface is reserved in the indoor unit (10); wherein an indoor unit (10) with an invalid air purification identifier bit is able to be selected to be connected to an air purification module (102) through the air purifier interface at any time, and the function selection setting identifier bit is adapted to be manually changed to be valid.

5. The air conditioner according to any one of claims 1 or 2, **characterized in that** the controller (20) is configured to control the air purification module (102) to be turned on while controlling the air purification identifier to be displayed.

6. The air conditioner according to any one of claims 1 or 2, **characterized in that** the controller (20) is further configured with one or any combination of a heating set temperature compensation release identifier bit, a heating cycle identifier bit, a compressor protection identifier bit, a fixed operation mode identifier bit and a fixed set temperature identifier bit.

## Patentansprüche

1. Klimaanlage, umfassend eine Inneneinheit (10) und eine Steuerung (20), wobei die Inneneinheit (10) eine Hauptsteuertafel (101) enthält und die Hauptsteuertafel (101) kommunikationstechnisch verdrahtet oder drahtlos mit der Steuerung (20) verbunden ist;
wobei die Hauptsteuertafel (101) mit einem Luftreinigungskennungsbit darin versehen ist, wobei das Luftreinigungskennungsbit einem Wert demgemäß, ob ein Luftreinigungsmodul (102) zur Ausstattung gehört, zugeordnet ist; und
wobei, wenn die Klimaanlage eingeschaltet ist, die Steuerung (20) zum Kommunizieren mit der Hauptsteuertafel (101) geeignet ist, die Hauptsteuertafel (101) zum Senden des Luftreinigungskennungsbits an die Steuerung (20) geeignet ist, und die Steuerung (20) zum Ausführen einer Steuerausgabe gemäß dem Luftreinigungskennungsbit konfiguriert ist; und
wobei in einem Fall, in dem das Luftreinigungskennungsbit gültig ist, bestimmt wird, dass die Inneneinheit (10) mit dem Luftreinigungsmodul (102) versehen ist und die Steuerung (20) zum Ansteuern, dass eine Luftreinigungskennung angezeigt wird, konfiguriert ist, wobei die Luftreinigungskennung zum Anzeigen eines Einschaltzustands des Luftreinigungsmoduls (102) benutzt ist; wobei andernfalls, falls die Luftreinigungskennung ungültig ist, bestimmt wird, dass die Inneneinheit (10) nicht mit dem Luftreinigungsmodul (102) versehen ist und die Steuerung (20) zum Ansteuern, dass die Luftreinigungskennung nicht angezeigt wird, konfiguriert ist;
wobei die Steuerung (20) ferner mit einem Funktionsauswahleinstellungs-Kennungsbit zur Zwangssteuerung der Anzeige oder Nichtanzeige der Luftreinigungskennung konfiguriert ist;
wobei das Funktionsauswahleinstellungs-Kennungsbit eine höhere Priorität als das Luftreinigungskennungsbit aufweist; und
wobei die Steuerung (20) zunächst zum Bestimmen, ob das Funktionsauswahleinstellungs-Kennungsbit gültig ist, konfiguriert ist, und, wenn das Funktionsauswahleinstellungs-Kennungsbit gültig ist, die Steuerung (20) zum Ansteuern, dass die Luftreinigungskennung angezeigt wird, konfiguriert ist.

2. Klimaanlage nach Anspruch 1, **dadurch gekennzeichnet, dass** der Einschaltzustand des Luftreinigungsmoduls (102) nur dann zur Änderung fähig ist, wenn die Luftreinigungskennung angezeigt ist,
wobei der Einschaltzustand des Luftreinigungsmoduls (102) durch Betätigen der Steuerung (20) durch einen Benutzer geändert wird, und wobei die Steuerung (20) zum Steuern, dass das Luftreinigungsmodul (102) gemäß der Betätigung durch den Benutzer ein- oder ausgeschaltet wird, und zur synchronen Änderung der Luftreinigungskennung konfiguriert ist.

3. Klimaanlage nach Anspruch 1 oder 2, **dadurch gekennzeichnet, dass** das Funktionsauswahleinstellungs-Kennungsbit, das in der Steuerung (20) implementiert ist, ferner Außerkraftsetzung und einen dritten Zustand beinhaltet, wobei, wenn das Funktionsauswahleinstellungs-Kennungsbit im dritten Zustand ist, die Steuerausgabe gemäß dem Luftreinigungskennungsbit ausgeführt wird, und wobei, wenn das Funktionsauswahleinstellungs-Kennungsbit ungültig ist, die Luftreinigungskennung derart gesteuert wird, dass sie nicht angezeigt wird.

4. Klimaanlage nach Anspruch 3, **dadurch gekennzeichnet, dass** das Funktionsauswahleinstellungs-Kennungsbit, das in der Steuerung (20) implementiert ist, standardmäßig im dritten Zustand ist und eine Luftreinigungsschnittstelle in der Inneneinheit (10) reserviert ist;
wobei eine Inneneinheit (10) mit einem ungültigen Luftreinigungskennungsbit jederzeit zur Verbindung mit einem Luftreinigungsmodul (102) über die Luftreinigungsschnittstelle auswählbar ist und das Funktionsauswahleinstellungs-Kennungsbit dazu geeignet ist, manuell auf gültig umgestellt zu werden.

5. Klimaanlage nach einem der Ansprüche 1 oder 2, **dadurch gekennzeichnet, dass** die Steuerung (20) dazu konfiguriert ist, das Luftreinigungsmodul (102) zum Einschalten anzusteuern, während sie die Luftreinigungskennung zur Anzeige ansteuert.

6. Klimaanlage nach einem der Ansprüche 1 oder 2, **dadurch gekennzeichnet, dass** die Steuerung (20) ferner mit einer oder jeglicher Kombination aus einem Heizsolltemperaturausgleichsfreigabe-Kennungsbit, einem Heizzykluskennungsbit, einem Verdichterschutzkennungsbit, einem Festbetriebskennungsbit und einem Bit für fest eingestellte Solltemperatur konfiguriert ist.

## Revendications

1. Climatiseur, comprenant une unité intérieure (10) et un dispositif de commande (20), dans lequel l'unité intérieure (10) comporte une carte de commande principale (101), et la carte de commande principale (101) est connectée de façon à communiquer au dispositif de commande (20) d'une manière filaire ou sans fil ;
dans lequel la carte de commande principale (101) contient un bit d'identifiant de purification d'air, le bit d'identifiant de purification d'air étant doté d'une valeur en fonction de si un module de purification d'air (102) est présent ; et dans lequel,
lorsque le climatiseur est allumé, le dispositif de commande (20) est adapté pour communiquer avec la carte de commande principale (101), la carte de commande principale (101) est adaptée pour envoyer le bit d'identifiant de purification d'air au dispositif de commande (20), et le dispositif de commande (20) est configuré pour réaliser une sortie de commande conformément au bit d'identifiant de purification d'air ;
et dans lequel dans un cas où le bit d'identifiant de purification d'air est valide, il est déterminé que l'unité intérieure (10) est munie du module de purification d'air (102) et le dispositif de commande (20) est configuré pour commander un identifiant de purification d'air pour qu'il soit affiché, l'identifiant de purification d'air étant utilisé pour indiquer un état d'allumage du module de purification d'air (102) ; sinon, dans un cas où l'identifiant de purification d'air est invalide, il est déterminé que l'unité intérieure (10) n'est pas munie du module de purification d'air (102), et le dispositif de commande (20) est configuré pour commander l'identifiant de purification d'air pour qu'il ne soit pas affiché ;
dans lequel le dispositif de commande (20) est en outre configuré avec un bit d'identifiant de réglage de sélection de fonction pour une commande forcée de l'affichage ou du non-affichage de l'identifiant de purification d'air ;
dans lequel le bit d'identifiant de réglage de sélection de fonction a une plus haute priorité que le bit d'identifiant de purification d'air ; et dans lequel
le dispositif de commande (20) est configuré pour déterminer tout d'abord si le bit d'identifiant de réglage de sélection de fonction est valide, et si le bit d'identifiant de réglage de sélection de fonction est valide, le dispositif de commande (20) est configuré pour commander l'identifiant de purification d'air pour qu'il soit affiché.

2. Climatiseur selon la revendication 1, **caractérisé en ce que** l'état d'allumage du module de purification d'air (102) peut être changé uniquement lorsque l'identifiant de purification d'air est affiché, dans lequel l'état d'allumage du module de purification d'air (102) est changé par une opération du dispositif de commande (20) par un utilisateur, et dans lequel le dispositif de commande (20) est configuré pour commander le module de purification d'air (102) pour qu'il soit allumé ou éteint conformément à l'opération de l'utilisateur, et pour changer l'identifiant de purification d'air de manière synchrone.

3. Climatiseur selon la revendication 1 ou 2, **caractérisé en ce que** le bit d'identifiant de réglage de sélection de fonction mis en œuvre dans le dispositif de commande (20) comporte en outre une invalidation et un troisième état, dans lequel, si le bit d'identifiant de réglage de sélection de fonction est dans le troisième état, la sortie de commande est réalisée conformément au bit d'identifiant de purification d'air, et dans lequel si le bit d'identifiant de réglage de sélection de fonction est invalide, l'identifiant de purification d'air est commandé pour qu'il ne soit pas affiché.

4. Climatiseur selon la revendication 3, **caractérisé en ce que** le bit d'identifiant de réglage de sélection de fonction mis en œuvre dans le dispositif de commande (20) est en défaut pour être dans le troisième état, et une interface de purificateur d'air est réservée dans l'unité intérieure (10) ; dans lequel une unité intérieure (10) avec un bit d'identifiant de purification d'air invalide peut être sélectionnée pour être reliée à un module de purification d'air (102) par le biais de l'interface de purificateur d'air à n'importe quel moment, et le bit d'identifiant de réglage de sélection de fonction est adapté pour être changé manuellement pour qu'il soit valide.

5. Climatiseur selon l'une quelconque des revendications 1 ou 2, **caractérisé en ce que** le dispositif de commande (20) est configuré pour commander le module de purification d'air (102) pour qu'il soit allumé tout en commandant l'identifiant de purification d'air pour qu'il soit affiché.

6. Climatiseur selon l'une quelconque des revendications 1 ou 2, **caractérisé en ce que** le dispositif de commande (20) est en outre configuré avec un parmi ou une quelconque combinaison d'un bit d'identifiant de libération de compensation de température définie de chauffage, un bit d'identifiant de cycle de chauffage, un bit d'identifiant de protection de compresseur, un bit d'identifiant de mode d'opération fixe et un bit d'identifiant de température réglée fixe.
